# FASCICULE DE BREVET EUROPEEN

(11) **EP 2 245 303 B1**
(45) Date de publication et mention de la délivrance du brevet: **27.03.2013**
(21) Numéro de dépôt: 09705085.0
(22) Date de dépôt: 20.01.2009
(51) Int. Cl.: F03C 1/04

(54) **DISPOSITIF DE MOTEUR HYDRAULIQUE POUR L'ASSISTANCE A LA TRANSMISSION MECANIQUE D'UN VEHICULE**
WASSERKRAFTMASCHINE ALS HILFE FÜR DAS MECHANISCHE GETRIEBE EINES FAHRZEUGES
HYDRAULIC ENGINE DEVICE FOR ASSISTANCE IN THE MECHANICAL TRANSMISSION OF A VEHICLE

(30) Priorité: 29.01.2008 FR 0850533
(43) Date de publication de la demande: 03.11.2010
(73) Titulaire: Poclain Hydraulics Industrie, 60411 Verberie (FR)
(72) Inventeur: HEREN, Jean, F-60280 Margny Les Compiegne (FR); LEMAIRE, Gilles, F-60280 Margny Les Compiegne (FR)
(74) Mandataire: Intès, Didier Gérard André
(86) Numéro de dépôt international: PCT/FR2009/050077
(87) Numéro de publication internationale: WO 2009/095580

(56) Documents cités:
- DE-B4- 19 580 685
- FR-A- 2 739 418
- FR-A- 2 853 364
- GB-A- 2 357 122
- US-A- 3 621 760

## Description

La présente invention concerne un dispositif de moteur hydraulique en particulier pour l'assistance à la transmission mécanique d'un véhicule, comportant un moteur hydraulique qui comprend un bloc-cylindres avec des cylindres dans lesquels coulissent des pistons radiaux et une came de réaction pour les pistons, le bloc-cylindres et la came étant montés à rotation relative autour d'un axe de rotation, le moteur comprenant, en outre, un distributeur de fluide pour les cylindres dont une partie au moins est solidaire en rotation de la came, et un raccord de distribution monté fixe par rapport à un référentiel du véhicule pour relier le distributeur à une alimentation et à un échappement de fluide, le moteur présentant un passage traversant disposé selon l'axe de rotation pour recevoir un tronçon d'arbre de transmission.

De tels dispositifs peuvent être utilisés pour l'entraînement de certains véhicules comme par exemple des moissonneuses-batteuses ou d'autres engins agricoles ou de chantier.

En effet, dans de tels engins, en plus d'une vitesse rapide servant au déplacement de l'engin sur route ('mode route'), on a besoin d'une vitesse lente et à fort couple pour faire avancer l'engin à vitesse réduite en vue d'un travail spécifique ('mode travail'). Dans ce mode 'travail', l'entraînement de l'engin peut requérir un contrôle très fin de la vitesse ou de la trajectoire, une avance de l'engin à vitesse réduite, l'absence de patinage, et surtout, un couple très élevé.

Pour permettre ces deux modes d'utilisation, on équipe généralement de tels engins d'une transmission hybride, mécanique et hydraulique. Une telle transmission comporte une transmission principale mécanique, apte à transmettre le couple moteur d'un moteur principal via des liaisons mécaniques, et une transmission auxiliaire hydraulique, comprenant un dispositif de moteur hydraulique tel que celui présenté en introduction.

Dans la transmission auxiliaire hydraulique, grâce au dispositif de moteur hydraulique, une partie de la puissance délivrée par le moteur principal (généralement un moteur thermique), est convertie en pression de fluide et transférée à un moteur hydraulique. Ce moteur hydraulique à son tour retransmet un couple moteur à la transmission principale mécanique, notamment pour des vitesses de rotation faibles, en remplacement du couple fourni par le moteur principal.

Avantageusement, un tel système d'entrainement permet de disposer pour le véhicule des deux modes d'utilisation différents souhaités.

L'entraînement de l'engin en mode 'route' est réalisé de manière classique par la transmission mécanique, qui transmet aux roues le couple du moteur principal. Le dispositif de moteur hydraulique est alors inactif et le moteur hydraulique est débrayé de la transmission mécanique.

En revanche, en mode 'travail', l'entraînement seulement par le moteur principal est inadapté, car il nécessiterait une démultiplication trop importante de la vitesse de rotation de l'arbre de sortie de ce moteur, et ne produirait pas le couple nécessaire.

On utilise dans ce cas le dispositif de moteur hydraulique. Son moteur hydraulique à pistons radiaux présente en effet les qualités requises pour l'entraînement de l'engin en mode 'travail' et la réalisation dans de bonnes conditions des travaux considérés, car il est particulièrement apte à délivrer un fort couple à une faible vitesse de rotation. Le couple d'entraînement en rotation est alors fourni par le moteur hydraulique, en remplacement du couple transmis en mode route à la transmission principale mécanique par le moteur principal.

Le brevet FR 2 739 418, considéré comme le document décrivant l'état de la technique antérieure le plus proche, présente un tel dispositif de moteur d'assistance hydraulique. Dans le dispositif présenté par ce brevet, le moteur comporte un carter fixe dont une face interne est aménagée en came, et abrite un bloc-cylindres monté à rotation relative par rapport au carter. Le bloc-cylindres est solidaire d'un crabot pour permettre l'embrayage ou le débrayage du moteur hydraulique, pour entraîner - ou non - un arbre de la transmission mécanique passant à travers le moteur.

Dans un tel dispositif, il est nécessaire que l'arbre de transmission mécanique soit à l'arrêt ou tourne à vitesse très réduite pour le crabotage ou le décrabotage, ce qui est peu pratique. En outre, cela complique la structure du moteur et augmente ses dimensions, en imposant le besoin d'une mobilité axiale de l'élément de crabot entraîné par le bloc-cylindres suivant l'axe de l'arbre de transmission mécanique, pour engager ou respectivement désengager la denture du crabot.

D'autre part, lorsque le moteur hydraulique est en prise (via le crabot) sur la transmission mécanique, la vitesse de rotation maximale est limitée, et avec un moteur tel que décrit, il n'est pas possible de désaccoupler le moteur hydraulique en rétractant les pistons. Pour cette raison, on est amené en pratique à utiliser comme moyen moteur entrainant directement en rotation les parties rotatives de la transmission mécanique, soit le moteur thermique, soit le moteur hydraulique, mais pas les deux en même temps.

Une autre solution connue consiste à utiliser un dispositif de moteur hydraulique comportant un bloc-cylindres tournant en prise avec un tronçon d'arbre de transmission, dont les pistons peuvent être maintenus en position désaccouplée de la came en étant rentrés dans leurs cylindres, pour maintenir le moteur en configuration débrayée. Toutefois, comme le bloc-cylindres est en prise avec le tronçon d'arbre de transmission, il tourne avec cet arbre même lorsque les pistons sont désaccouplés, soumettant ainsi ces derniers à des forces centrifuges, qui tendent à les faire ressortir des cylindres. Pour la configuration débrayée, il est donc nécessaire d'équilibrer ces forces par des pressions de fluide qui maintiennent les pistons en position rentrée dans les cylindres. Il s'ensuit que les moyens nécessaires pour le fonctionnement en configuration débrayée sont relativement complexes.

Dans ce cas également, on est donc amené à utiliser comme moyen moteur entrainant directement en rotation les parties rotatives de la transmission mécanique, soit le moteur thermique, soit le moteur hydraulique, mais pas les deux en même temps.

Un premier objet de la présente invention est de concevoir un dispositif du type présenté en préambule, dont le moteur hydraulique puisse soit être débrayé de la transmission mécanique, soit apporter un complément de couple à celle-ci, soit fonctionner en substitution de celle-ci, tout en restant relativement simple et notamment sans crabot.

Cet objectif est atteint grâce au fait que le moteur peut adopter une configuration débrayée, dans laquelle les pistons sont radialement désaccouplés de la came, le bloc-cylindres est fixe par rapport au référentiel du véhicule tandis que la came est rotative, et la came est solidaire en rotation avec un tronçon d'arbre de transmission disposé dans ledit passage traversant.

Dans le bloc-cylindres, lorsque les pistons sont en position 'rentrée' dans les cylindres, c'est-à-dire en position désaccouplée de la came, le moteur est en mode débrayé. Dans ce mode, comme le bloc-cylindres est fixe, les pistons ne subissent pas de force centrifuge, ce qui fait que les pistons sont dans une position désaccouplée stable. Ce résultat ne peut être obtenu avec le moteur ayant un bloc-cylindres rotatif disposé à l'intérieur d'une came fixe, cité précédemment.

La solidarisation en rotation entre le tronçon d'arbre de transmission et la came est généralement utilisée pour transmettre un couple moteur de la came au tronçon d'arbre de transmission. Toutefois, la came ou éventuellement une pièce intermédiaire reliée à la came peut faire elle-même partie de la transmission mécanique, et recevoir ainsi le couple moteur transmis par le tronçon d'arbre de transmission, pour le transmettre à des organes de déplacement par exemple. Dans ce cas, le couple moteur produit par le moteur hydraulique peut être directement transmis par la came auxdits organes de déplacement, sans passer par le tronçon d'arbre de transmission.

Enfin, dans le moteur hydraulique le bloc-cylindres est fixe par rapport au référentiel du véhicule, c'est-à-dire que le bloc-cylindres ne tourne pas. Il en résulte qu'aucune force centrifuge ne s'applique sur les pistons du bloc-cylindres. Le maintien du moteur en configuration débrayée est donc aisé.

En outre, grâce à l'invention il est possible d'embrayer ou de débrayer le moteur hydraulique, même si le tronçon d'arbre de transmission tourne à une vitesse significative.

On notera en particulier que par rapport à une transmission purement mécanique principalement conçue pour le mode route, le dispositif de moteur hydraulique suivant l'invention simplifie considérablement la boite de vitesse et la transmission, en évitant de prévoir des étages de réduction supplémentaires pour les vitesses de travail très lentes.

Inversement, les transmissions mécaniques conçues principalement pour le mode travail n'ont pas un bon rendement en mode route : L'invention permet d'éviter ce problème, en fournissant une très bonne transmission pour le mode travail, et une transmission optimisée pour le mode route. Plus précisément, avec l'invention, la traînée hydrodynamique du moteur hydraulique est très réduite, et donc ne pénalise pas le rendement de la transmission lorsque celle-ci est en mode route.

Dans un mode de réalisation, le dispositif comprend en outre une pièce d'entraînement solidaire de la came et qui est apte à coopérer avec ledit tronçon d'arbre de transmission pour entraîner ledit tronçon d'arbre en rotation.

La pièce d'entraînement comporte par exemple des cannelures axiales internes sur une extrémité, aptes à coopérer avec des cannelures complémentaires du tronçon d'arbre de transmission pour solidariser la pièce d'entraînement et le tronçon d'arbre de transmission.

Comme la pièce d'entraînement assure le transfert du couple moteur de la came jusqu'au tronçon d'arbre de transmission, la came reste ainsi de petites dimensions, ce qui permet son remplacement à moindre coût, et réduit son coût de fabrication, les contraintes de fabrication pour l'usinage de la came étant particulièrement sévères.

Dans un mode de réalisation, la pièce d'entrainement et le tronçon d'arbre de transmission ne forment qu'une et même pièce. Ainsi, la transmission est simplifiée grâce à un nombre de pièces réduit, et le risque de dysfonctionnement au niveau de la jonction entre la pièce d'entrainement et le tronçon d'arbre de transmission est éliminé.

Dans un mode de réalisation, le moteur hydraulique présente sur sa périphérie une partie de raccordement adaptée pour transmettre un couple, comme par exemple une bride. Ainsi, au lieu de transmettre le couple sensiblement au voisinage de l'axe du tronçon d'arbre de transmission, le couple est transmis au niveau d'une partie de raccordement de plus grand diamètre. Ainsi les contraintes mécaniques reçues par cette partie de raccordement sont réduites. La partie de raccordement peut être située sur toute pièce du moteur solidaire de la came, comme la pièce d'entrainement, la came elle-même, ou toute autre partie de carter du moteur solidaire de la came. La transmission du couple à ce niveau, plutôt que via une extrémité du tronçon d'arbre de transmission, permet en outre avantageusement d'augmenter la compacité de la transmission en réduisant son encombrement axial.

Dans un mode de réalisation, le raccord de distribution présente une partie de manchon, dont la périphérie interne forme une partie du passage traversant. Selon le mode de réalisation, cette partie peut-être plus ou moins allongée. Elle peut ainsi s'étendre sur une distance suffisante pour traverser le distributeur et le bloc-cylindres. Le raccord de distribution peut alors servir en particulier à assurer, au moins en partie et grâce à des paliers, la fixation et/ou le positionnement du moteur sur le tronçon d'arbre. Dans ce dernier cas, la double fonction du raccord, à savoir le transport des fluides d'alimentation et d'échappement du moteur, cumulée avec le maintien du moteur, contribue à la compacité du dispositif de moteur hydraulique.

Un second objet de la présente invention est de concevoir un système d'entraînement d'un véhicule, comprenant une transmission mécanique, opérée par au moins un moteur principal, et qui présente un mode route dans lequel le couple moteur est fourni principalement par le moteur principal, et un mode travail dans lequel le couple moteur est fourni par un ou plusieurs dispositifs de moteurs hydrauliques, en appoint ou non du moteur principal, le système d'entraînement restant relativement simple.

Cet objectif est atteint grâce au fait que le système d'entraînement du véhicule comporte un dispositif tel que défini précédemment, et dont le tronçon d'arbre de transmission est une partie de la transmission mécanique.

L'invention sera bien comprise et ses avantages apparaîtront mieux à la lecture de la description détaillée qui suit, de modes de réalisation représentés à titre d'exemples non limitatifs. La description se réfère aux dessins annexés sur lesquels :
- les figures 1A et 2 montrent en coupe axiale, des dispositifs de moteur hydraulique d'assistance selon l'invention, dans un premier et un second modes de réalisation de l'invention ;
- la figure 1B montre en coupe axiale, une vue partielle d'une variante du dispositif de moteur hydraulique de la figure 1A ;
- la figure 3 est une coupe radiale du moteur passant à travers le bloc-cylindres dans le second mode de réalisation, passant par le plan III-III de la figure 2 ;
- les figures 4 et 5 sont des vues de dessus schématiques de systèmes d'entraînement de véhicules, conformes à l'invention, dans deux modes de réalisation différents.

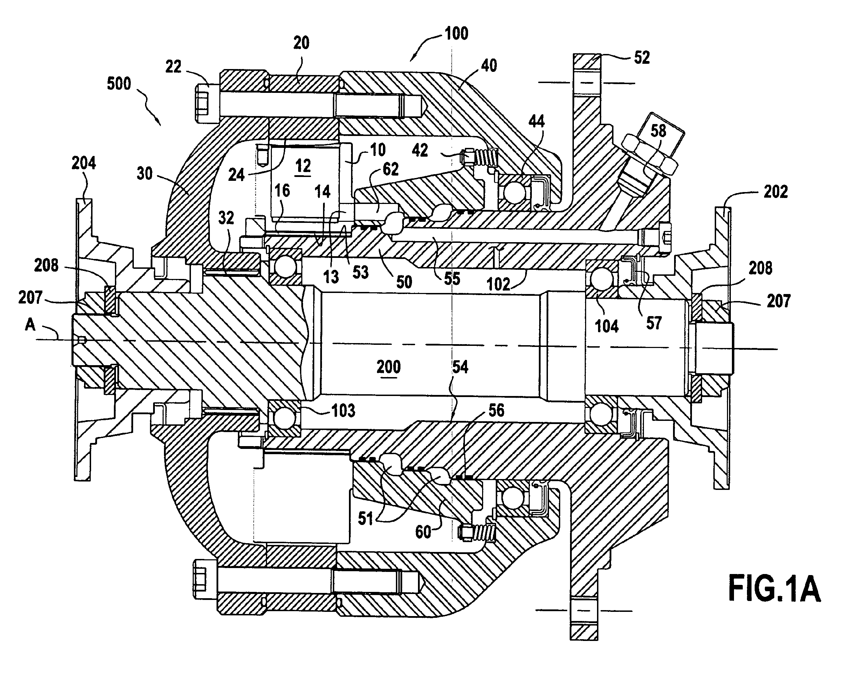

En faisant référence à la figure 1A, un dispositif de moteur hydraulique conforme à l'invention, dans un premier mode de réalisation, va maintenant être présenté.

Le dispositif de moteur hydraulique 500 de la figure 1A comporte :
- un arbre de transmission mécanique 200, portant aux deux extrémités des plateaux d'accouplement respectivement d'entrée 202, et de sortie 204, en vue de le raccorder aux autres tronçons de la transmission mécanique de l'engin ;
- un moteur hydraulique 100, présentant un passage traversant 102 dans lequel passe l'arbre 200.

Le moteur hydraulique 100 comporte :
- un bloc-cylindres 10, dans lequel sont montés coulissants des pistons radiaux 12 ;
- un ensemble carter en trois parties 20, 30, 40, fixées ensemble par des vis 22, dans lequel la première partie 20 est une came de réaction montée rotative autour de l'axe de l'arbre 200, mise en rotation par l'action des pistons 12 sur sa surface de came interne ondulée 24 ; la deuxième partie 30 est une pièce d'entraînement assurant le transfert du couple reçu par la came 20 à l'arbre 200 via des cannelures 32 ; la troisième partie 40 est un carter de distribution ;
- un raccord de distribution 50, monté fixe sur le châssis de l'engin (non représenté) par une partie de bride 52, et comportant en outre une partie de manchon 54, s'étendant autour de l'arbre de transmission 200 ;
- un distributeur 60, monté mobile en rotation autour d'une surface 56 à symétrie de révolution de ladite partie de manchon 54, synchronisé en rotation avec le carter de distribution 40 grâce à des vis à ressort 42, et par conséquent solidaire en rotation de la came 20.

Dans le bloc-cylindres, les cylindres sont orientés radialement par rapport à l'axe de rotation A et la surface de came 24 de la came de réaction 20 est disposée autour du bloc-cylindres 10 et est tournée vers l'axe de rotation (A).

Le raccord de distribution 50 est connecté par des orifices 58 d'alimentation et d'échappement de fluide à des conduites d'amenée et d'évacuation de fluide (non représentées) de l'engin.

Le distributeur 60 comporte des conduites de distribution 62 qui sont respectivement reliées à l'alimentation et à l'échappement par les conduites 55 du raccord de distribution 50, via deux gorges 51 aménagées entre le raccord de distribution 50 et le distributeur 60. Les conduites de cylindres 13 communiquent avec les conduites de distribution 62 au cours de la rotation du distributeur pour alternativement relier les cylindres à l'alimentation et à l'échappement.

Le maintien du moteur hydraulique 100 sur l'arbre de transmission 200 est assuré par des paliers rotatifs 103 et 104 disposés dans la partie de manchon 54 du raccord de distribution 50 autour de l'arbre 200. Dans ce but, la partie de manchon coopère avec au moins un palier de support à rotation du tronçon d'arbre par rapport au moteur. Elle assure ainsi le maintien en position du tronçon d'arbre 200 au niveau de son passage à travers le moteur hydraulique. Les paliers à billes 103 et 104 sont écartés l'un de l'autre et placés sensiblement de part et d'autre du moteur hydraulique, de manière à limiter les efforts radiaux qu'ils peuvent subir. -Ainsi dans le mode de réalisation présenté, l'un de ces paliers se trouve au voisinage de l'alimentation et de l'échappement de fluide (orifices 58), et l'autre se trouve au niveau (axialement) du bloc-cylindres 10, à l'intérieur de la partie de manchon 54, qui s'étend dans un passage interne 14 du bloc-cylindres 10.

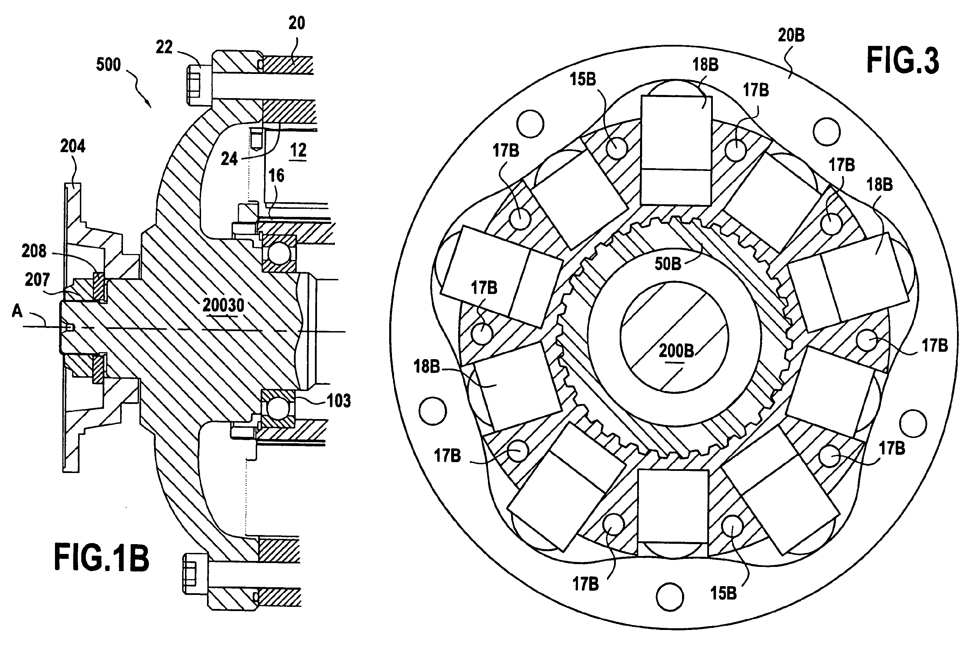

La fuite de fluide entre le raccord de distribution 50 et l'arbre de transmission 200 est empêchée par un joint annulaire à lèvre 57 disposé autour de l'arbre 200, à son extrémité du côté du plateau d'accouplement d'entrée 202. Dans ce premier mode de réalisation (figure 1), le distributeur 60 est disposé autour de la partie de manchon 54. Il se trouve du même côté du bloc-cylindres que l'alimentation et l'échappement de fluide (orifices 58).

Le carter de distribution 40 est fixé à la came 20 par les vis 22, et est guidé en rotation autour de la partie de manchon 54 par un palier 44 de support à rotation.

Des pièces de maintien 207 sont vissées aux extrémités de l'arbre 200, pour maintenir axialement les plateaux d'accouplement 202, 204 à l'aide de rondelles 208.

Dans le mode de réalisation de la figure 1, le couple moteur délivré en sortie sous les actions conjuguées du moteur principal et/ou du moteur hydraulique, est transmis par le plateau d'accouplement de sortie 204 (à gauche sur la figure 1A), le tronçon 200 d'arbre de transmission recevant le couple provenant du moteur principal par le plateau d'accouplement d'entrée 202.

Dans un autre mode de réalisation, le couple moteur peut être délivré en sortie via le moteur lui-même, au niveau d'une partie de raccordement située sur la périphérie du moteur (par rapport à son axe de rotation) et adaptée pour transmettre un couple. Cette partie de raccordement peut faire partie d'une pièce quelconque de l'ensemble carter, par exemple de la pièce d'entrainement 30, de la came de réaction 20, ou encore du carter de distribution 40.

Le fonctionnement du dispositif de moteur hydraulique est le suivant :

En mode moteur du moteur hydraulique, celui-ci reçoit et évacue le fluide hydraulique sous pression via les orifices d'alimentation et d'échappement 58. Le fluide transite via les conduites intérieures 55 du raccord de distribution 50, est échangé avec le distributeur 60 via les gorges 51, traverse le distributeur 60 par les conduites 62, et est finalement échangé avec les cylindres par les conduites de cylindres 13.

Du fait de la rotation relative du distributeur 60 par rapport au bloc-cylindres 10, les cylindres sont périodiquement partiellement remplis et vidés et la pression de fluide varie périodiquement dans les cylindres. Il en résulte que les pistons 12 du moteur sont pressés contre la surface de came 24, de manière à développer un couple moteur, transmis à l'ensemble carter. L'ensemble carter étant solidaire en rotation de l'arbre 200, ce dernier est entraîné en rotation par le moteur hydraulique.

En réaction à ce couple moteur, le bloc-cylindres 12 reçoit un couple résistant de sens opposé à celui du couple moteur. Le bloc-cylindres comporte des cannelures 16 dans son passage interne 14, qui engrènent des cannelures correspondantes 53 du raccord de distribution. Le couple résistant est ainsi transmis au raccord de distribution qui retransmet ces efforts au reste de l'engin par sa partie de bride 52.

Pour passer du mode moteur au mode débrayé du moteur hydraulique, il suffit simplement d'interrompre l'alimentation du moteur hydraulique en fluide sous pression. Dans ces conditions, aucune force ne vient plus en effet solliciter les pistons radialement pour les engager contre la came. Les pistons restent donc en position désaccouplée de la came et le moteur hydraulique est ainsi mis au repos, le carter tournant librement, 'en roue libre' autour du bloc-cylindres et du raccord de distribution.

A l'inverse, pour passer du mode débrayé au mode moteur du moteur hydraulique, il est nécessaire de passer par une phase d'accélération en rotation de l'ensemble carter, qui permet une synchronisation des vitesses et des positions relatives de l'ensemble carter et de l'arbre 200.

En faisant référence à la figure 1B, une variante du dispositif de moteur hydraulique représenté sur la figure 1A va maintenant être présentée.

Dans le dispositif de moteur hydraulique de la figure 1B, le tronçon d'arbre de transmission et la pièce d'entrainement (qui portaient les références 200 et 30 sur la figure 1A) sont formés sous forme d'une pièce unique 20030. Ainsi, la liaison par cannelures entre ces deux pièces est supprimée, et avec elle les contraintes de fabrication et les problèmes éventuels de jeux qui peuvent survenir dans cette liaison.

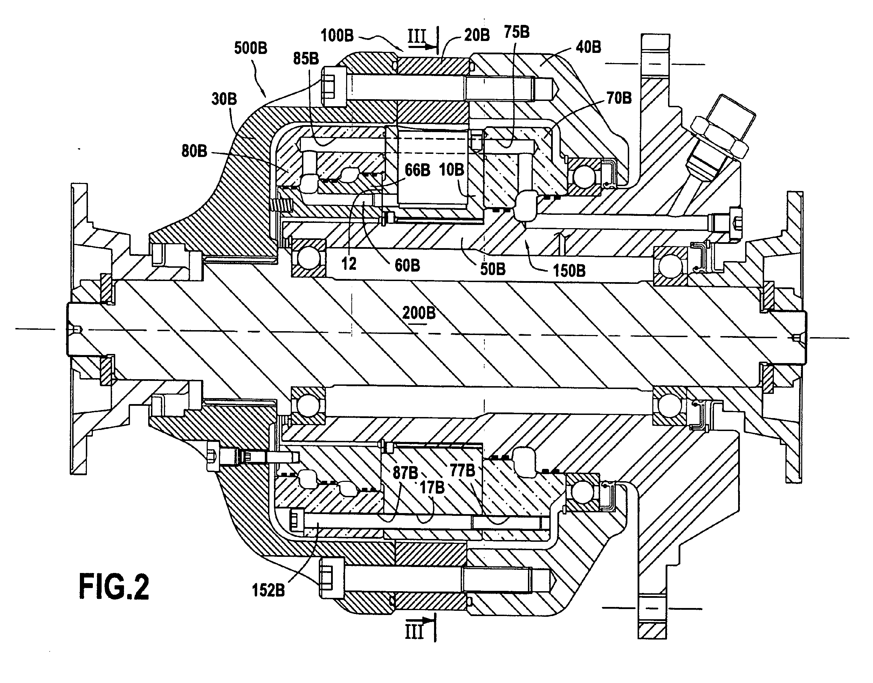

En faisant référence aux figures 2 et 3, un dispositif de moteur hydraulique dans un second mode de réalisation de l'invention va maintenant être présenté.

Le dispositif de moteur hydraulique 500B des figures 2 et 3 comporte un arbre de transmission mécanique 200B et un moteur hydraulique 100B.

Le moteur hydraulique 100B comporte un bloc-cylindres 10B, un ensemble carter en trois parties 20B, 30B, 40B, un raccord de distribution 50B, un distributeur 60B.

Sauf mention contraire, ces différents composants du moteur hydraulique 100B ont des positions relatives et des fonctions similaires aux parties correspondantes du moteur hydraulique 100 du premier mode de réalisation de l'invention.

La différence structurelle principale est due à la modification du système de distribution de fluide hydraulique. Le raccord de distribution 150B n'est plus une pièce unique 50 comme dans le moteur 100, mais est composé de trois pièces principales 50B, 70B, 80B.

Ainsi, au lieu d'avoir un échange du fluide entre les orifices d'amenée et de retour de fluide 58 et le distributeur via une pièce unique 50 (le raccord de distribution 50 du moteur 100), dans le moteur 100B, cet échange de fluide a lieu via les trois pièces 50B, 70B, 80B du raccord de distribution 150B.

Les pièces 70B et 80B sont disposées de part et d'autre du bloc-cylindres 10B. Elles sont percées de canalisations internes 75B et 85B respectivement, par lesquelles transite le fluide hydraulique.

Le bloc-cylindres 10B et les pièces 70B et 80B sont fixés ensembles par des vis 152B, disposées axialement dans des passages 17B, 77B, 87B prévus dans ces pièces.

Comme la pièce 80B, le distributeur est disposé de l'autre côté du bloc-cylindres par rapport à l'alimentation et à l'échappement de fluide.

L'avantage de cette disposition est que la glace de distribution 12 se trouve à l'opposé de l'alimentation et de l'échappement de fluide du moteur. Ainsi, la pression de fluide s'exerçant sur la glace a tendance avantageusement à pousser le bloc cylindres vers l'alimentation et l'échappement de fluide du moteur, c'est-à-dire vers le châssis du véhicule. Le moteur 100B a ainsi tendance à rester compact et à limiter ses fuites.

La coupe de la figure 3 fait apparaître la section du moteur hydraulique 100B au niveau du bloc-cylindres 10B. Le bloc-cylindres comporte dix cylindres 18B. Entre les cylindres sont aménagés :
- huit passages 17B pour les vis 152B
- deux passages 15B respectivement pour l'alimentation et l'évacuation de fluide hydraulique.

Ainsi le distributeur est relié à l'alimentation et à l'échappement de fluide via des conduits traversant le bloc-cylindres entre les cylindres. Comme le bloc-cylindres est fixe, avantageusement on utilise l'espace libre entre les cylindres pour faire passer à travers les conduites de fluide hydraulique, ce qui évite d'augmenter le diamètre du bloc-cylindres.

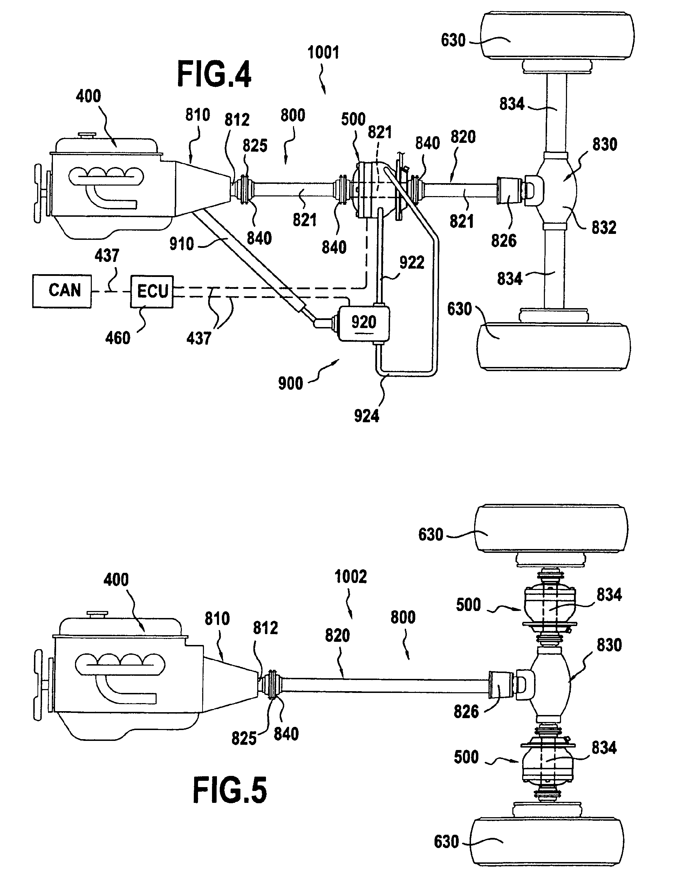

En faisant référence aux figures 4 et 5, deux système d'entraînement 1001, 1002 de véhicule (non représenté), chacun comprenant au moins un dispositif de moteur hydraulique 500 conforme à l'invention, vont maintenant être présentés.

Ces systèmes entrainent des roues 630 en transmettant la puissance délivrée par un moteur principal 400 à combustion interne. Chacun de ces systèmes comporte une transmission principale mécanique 800 et une transmission auxiliaire hydraulique. Naturellement, le véhicule peut comporter d'autres roues et d'autres organes de transmission complémentaires.

La transmission principale mécanique 800 comporte une boîte de vitesse mécanique 810, un arbre de transmission principal 820, et un pont 830.

Cette transmission mécanique 800 transmet le couple moteur de sortie du moteur 400 aux roues 630 de la manière suivante :

Le moteur 400 est couplé à la boîte de vitesse 810, à laquelle il communique un couple moteur. La boîte de vitesse 810 délivre ce couple moteur sur son arbre de sortie 812. Cet arbre 812 est relié à une première extrémité 825 d'un arbre de transmission principal 820 qu'il entraine en rotation. L'arbre de transmission principal 820 est relié à son autre extrémité 826 à un pont 830. Le pont 830 comporte un répartiteur 832 et deux demi-arbres 834.

Le répartiteur 832 qui comprend un différentiel, reçoit le couple moteur de l'arbre de transmission principal 820, et le transmet aux demi-arbres 834. Ceux-ci sont liés aux roues 630 auxquelles ils communiquent le couple moteur.

En plus de cette transmission principale mécanique, les systèmes d'entrainement 1001 et 1002 comportent également une transmission auxiliaire hydraulique.

Cette transmission auxiliaire hydraulique comporte :
- au moins un dispositif de moteur d'assistance hydraulique 500,
- une pompe hydraulique,
- un arbre secondaire de transmission de puissance mécanique à la pompe hydraulique pour entrainer celle-ci, et
- un circuit hydraulique reliant la pompe hydraulique à l'alimentation et l'échappement du ou des dispositif(s) de moteur hydraulique 500 pour alimenter ce(s) dernier(s) en fluide hydraulique sous pression.

Dans la transmission de puissance auxiliaire hydraulique, le ou les dispositif(s) de moteur hydraulique 500 entrainent directement des éléments rotatifs de la transmission mécanique, à savoir un tronçon 821 de l'arbre de transmission principal 820 dans le système d'entrainement 1001 (figure 4), ou des demi-arbres de transmission 834 dans le système d'entrainement 1002 (figure 5).

La figure 4 présente un système d'entrainement 1001 comportant un dispositif de moteur hydraulique 500 selon l'invention. Ce système d'entrainement 1001 comporte une transmission auxiliaire hydraulique 900 qui va maintenant être présentée.

Comme cela a été dit précédemment, la boîte de vitesse 810 comporte un arbre de sortie 812 servant à la transmission principale mécanique 800. En outre, est également raccordé à cette boîte de vitesse 810 un arbre de sortie secondaire 910, qui est ainsi entrainé en rotation. L'arbre secondaire 910 est relié à une pompe hydraulique 920 qu'il entraine à son tour. La pompe 920 est reliée au dispositif de moteur hydraulique 500 par un circuit hydraulique comportant un circuit 922 d'alimentation et un circuit 924 d'échappement du dispositif de moteur hydralique 500. Grâce à ces circuit si la pompe 920 alimente le dispositif de moteur hydraulique 500 en fluide sous pression.

Ainsi, une partie de la puissance motrice transmise par le moteur 400 à la boîte de vitesse 810 est retransmise à la pompe hydraulique 920 via l'arbre 910. La pompe 920 convertit l'énergie mécanique de rotation en énergie fluidique sous forme d'une pression de fluide. Le fluide sous pression entraine en rotation le dispositif de moteur hydraulique 500, qui à son tour reconvertit cette puissance motrice en puissance mécanique en entrainant en rotation un tronçon d'arbre 821 sur lequel il est placé.

Ce tronçon 821 est un tronçon central d'une suite de trois tronçons 821, reliés les uns à la suite des autres par des brides 840, constituant l'arbre principal 820 de la transmission principale mécanique.

Avantageusement, l'appoint de puissance mécanique délivré par le dispositif de moteur hydraulique 500 peut venir en substitution ou en complément de la puissance transmise directement par le moteur 400 sur l'arbre de sortie 812 de la boîte de vitesse 810. Cet appoint de puissance fourni par la transmission hydraulique peut notamment être utilisé aux faibles vitesses de rotation de l'arbre 820, vitesses auxquelles le moteur 400 en association avec la boîte de vitesse 810 n'est pas performant.

Le fonctionnement de la transmission hydraulique 900 est piloté par une unité de contrôle électronique (ECU) 460. Celle-ci est reliée au dispositif de moteur hydraulique 500, à la pompe 920, et au bus CAN de données du véhicule par des liaisons d'échange de données 437, et permet de commander et contrôler le fonctionnement de la transmission hydraulique 900.

Le système d'entraînement 1002 de véhicule représenté sur la figure 5 comporte également une transmission auxiliaire hydraulique analogue à celle de la figure 4. Comme le principe général du fonctionnement d'une transmission auxiliaire hydraulique auxiliaire, dans laquelle une partie de la puissance mécanique est dirigée vers une pompe pour actionner un moteur d'assistance hydraulique, est connu (et de plus a été rappelé en relation avec la figure 4), dans la figure 5 seuls les dispositifs de moteurs hydrauliques 500 de la transmission auxiliaire hydraulique ont été représentés.

Dans le système d'entrainement 1002 de la figure 5, l'arbre de transmission principal 820 ne comporte qu'un seul tronçon.

Dans ce système d'entrainement, l'appoint d'entraînement par la transmission hydraulique est apporté non pas sur un tronçon de l'arbre de transmission principal 820, mais au niveau des demi-arbres 834. En effet, chacun de ceux-ci comporte un dispositif de moteur hydraulique tel que celui décrit précédemment.

Ainsi dans ce système d'entraînement, les tronçons d'arbre de transmission intégrés dans les dispositifs de moteur hydraulique 500 sont des parties d'arbres de transmission secondaires 834, reliés à un arbre de transmission principal 820 de la transmission mécanique 800.

Avantageusement, le système d'entrainement 1002 permet d'exercer une action anti-patinage, pour éviter le patinage d'une roue, qui peut se produire lorsqu'on utilise un pont 830 comprenant un différentiel sur un sol glissant. Dans ce but, le système d'entrainement permet de contrôler ou de commander de manière séparée les vitesses de rotation des moteurs des deux dispositifs de moteur hydraulique 500, par des moyens de contrôle notamment hydrauliques, ce qui permet de garantir qu'un couple moteur est exercé sur au moins l'une des deux roues, même si l'autre patine.

## Revendications

1. Dispositif de moteur hydraulique en particulier pour l'assistance à la transmission mécanique d'un véhicule, comportant un moteur hydraulique (500) qui comprend un bloc-cylindres (10) avec des cylindres dans lesquels coulissent des pistons radiaux (12) et une came de réaction (20) pour les pistons, le bloc-cylindres et la came étant montés à rotation relative autour d'un axe de rotation (A), le moteur comprenant, en outre, un distributeur de fluide (60) pour les cylindres dont une partie au moins est solidaire en rotation de la came (20), et un raccord de distribution (50, 150B) monté fixe par rapport à un référentiel du véhicule pour relier le distributeur (60) à une alimentation et à un échappement de fluide, le moteur présentant un passage traversant (102) disposé selon l'axe de rotation pour recevoir un tronçon d'arbre de transmission, **caractérisé en ce que** le moteur peut adopter une configuration débrayée, dans laquelle les pistons (12) sont radialement désaccouplés de la came (20), le bloc cylindres (10) est fixe par rapport au référentiel du véhicule tandis que la came (20) est rotative, et la came (20) est solidaire en rotation avec un tronçon (200) d'arbre de transmission disposé dans ledit passage traversant (102).

2. Dispositif selon la revendication 1, comprenant en outre une pièce d'entraînement (30) solidaire de la came (20) et qui est apte à coopérer avec ledit tronçon (200) d'arbre de transmission pour entraîner ledit tronçon d'arbre en rotation.

3. Dispositif selon la revendication 2, **caractérisé en ce que** la pièce d'entrainement et le tronçon d'arbre de transmission ne forment qu'une et même pièce (20030).

4. Dispositif selon l'une quelconque des revendications 1 à 3, **caractérisé en ce que** le moteur hydraulique présente sur sa périphérie une partie de raccordement adaptée pour transmettre un couple.

5. Dispositif selon l'une quelconque des revendications 1 à 4, **caractérisé en ce que** le raccord de distribution (50) présente une partie de manchon (54), dont la périphérie interne forme une partie du passage traversant (102).

6. Dispositif selon la revendication 5, **caractérisé en ce que** le distributeur (60) est disposé autour de ladite partie de manchon (54).

7. Dispositif selon la revendication 5 ou 6, **caractérisé en ce que** la partie de manchon (54) s'étend dans un passage interne (14) du bloc-cylindres.

8. Dispositif selon l'une quelconque des revendications 5 à 7, **caractérisé en ce que** la partie de manchon (54) coopère avec au moins un palier de support à rotation (103,104) du tronçon d'arbre (200) par rapport au moteur.

9. Dispositif selon l'une quelconque des revendications 1 à 8, **caractérisé en ce que** le distributeur (60) est disposé de l'autre côté du bloc-cylindres (10) par rapport à l'alimentation et à l'échappement de fluide (58).

10. Dispositif selon la revendication 9, **caractérisé en ce que** le distributeur (60) est relié à l'alimentation et à l'échappement de fluide (58) via des conduits (15B) traversant le bloc-cylindres (10B) entre les cylindres (18B).

11. Dispositif selon l'une quelconque des revendications 1 à 8 **caractérisé en ce que** le distributeur (60) est disposé du même côté du bloc-cylindres (10) que l'alimentation et l'échappement de fluide.

12. Dispositif selon l'une quelconque des revendications 1 à 11, **caractérisé en ce que** les cylindres (18B) sont orientés radialement par rapport à l'axe de rotation (A) et la surface de came (24) de la came de réaction (20) est disposée autour du bloc-cylindres (10) et est tournée vers l'axe de rotation (A).

13. Dispositif selon l'une quelconque des revendications 1 à 12, **caractérisé en ce que** le distributeur (60) pour les cylindres est solidaire en rotation de la came (20).

14. Système d'entraînement d'un véhicule (1001,1002), comprenant une transmission mécanique (800), opérée par au moins un moteur principal (400), et un dispositif (500) selon l'une quelconque des revendications 1 à 13, le tronçon d'arbre de transmission (611,811) étant une partie de la transmission mécanique.

15. Système d'entraînement (1001) d'un véhicule selon la revendication 14, dans lequel le tronçon d'arbre de transmission (811) est une partie d'un arbre de transmission principal (810) relié au moteur principal (400).

16. Système d'entraînement (1002) d'un véhicule selon la revendication 14, dans lequel le tronçon d'arbre de transmission est une partie d'un arbre de transmission secondaire (611) qui est relié à un arbre de transmission principal (810) de la transmission mécanique (800).

## Claims

1. A hydraulic motor device, in particular for assisting the mechanical transmission of a vehicle, which hydraulic motor device includes a hydraulic motor (500) that comprises a cylinder block (10) having cylinders slidably receiving radial pistons (12), and a reaction cam (20) for the pistons, the cylinder block and the cam being mounted to move in rotation relative to each other about an axis of rotation (A), the motor further comprising a fluid distributor (60) for the cylinders, a portion of which distributor is constrained in rotation with the cam (20), and a distribution coupling (50, 150B) mounted to be stationary relative to a reference frame of the vehicle and for connecting the distributor (60) to a fluid feed and to a fluid discharge, the motor having a through passage (102) disposed along the axis of rotation for the purpose of receiving a transmission shaft segment, said hydraulic motor device being **characterized in that** the motor can take up a declutched configuration in which the pistons (12) are radially uncoupled from the cam (20), the cylinder block (10) is stationary relative to the reference frame of the vehicle, while the cam (20) is rotary, and the cam (20) is constrained in rotation with a transmission shaft segment (200) that is disposed in said through passage (102).

2. A device according to claim 1, further including a drive part (30) secured to the cam (20) and that is suitable for co-operating with said transmission shaft segment (200) to drive said shaft segment in rotation.

3. A device according to claim 2, **characterized in that** the drive part and the transmission shaft segment are formed integrally as a single part (20030).

4. A device according to any one of claims 1 to 3, **characterized in that**, on its periphery, the hydraulic motor has a connection portion adapted to transmit torque.

5. A device according to any one of claims 1 to 4, **characterized in that** the distribution coupling (50) has a sleeve portion (54) whose inside periphery forms a portion of the through passage (102).

6. A device according to claim 5, **characterized in that** the distributor (60) is disposed around said sleeve portion (54).

7. A device according to claim 5 or claim 6, **characterized in that** the sleeve portion (54) extends in an internal passage (14) of the cylinder block.

8. A device according to any one of claims 5 to 7, **characterized in that** the sleeve portion (54) co-operates with at least one rotary support bearing (103, 104) for supporting the shaft segment (200) in rotation relative to the motor.

9. A device according to any one of claims 1 to 8, **characterized in that** the distributor (60) is disposed on the other side of the cylinder block (10) from the fluid feed and fluid discharge (58).

10. A device according to claim 9, **characterized in that** the distributor (60) is connected to the fluid feed and to the fluid discharge (58) via ducts (15B) passing through the cylinder block (10B) between the cylinders (18B).

11. A device according to any one of claims 1 to 8, **characterized in that** the distributor (60) is disposed on the same side of the cylinder block (10) as the fluid feed and fluid discharge.

12. A device according to any one of claims 1 to 11, **characterized in that** the cylinders (18B) extend radially relative to the axis of rotation (A), and the cam surface (24) of the reaction cam (20) is disposed around the cylinder block (10) and faces towards the axis of rotation (A).

13. A device according to any one of claims 1 to 12, **characterized in that** the distributor (60) for the cylinders is constrained in rotation with the cam (20).

14. A vehicle drive system (1001, 1002), comprising a mechanical transmission (800) operated by at least one main engine or motor (400), and a device (500) according to any one of claims 1 to 13, the transmission shaft segment (611, 811) being a portion of the mechanical transmission.

15. A vehicle drive system (1001) according to claim 14, in which system the transmission shaft segment (811) is a portion of a main transmission shaft (810) connected to the main engine or motor (400).

16. A vehicle drive system (1002) according to claim 14, in which the transmission shaft segment is a portion of a secondary transmission shaft (611) that is connected to a main transmission shaft (810) of the mechanical transmission (800).

## Patentansprüche

1. Hydraulikmotorvorrichtung, insbesondere zur Unterstützung des mechanischen Getriebes eines Fahrzeugs, umfassend einen Hydraulikmotor (500), der einen Zylinderblock (10) mit Zylindern, in denen Radialkolben (12) gleiten, und einen Reaktionsnocken (20) für die Kolben umfaßt, wobei der Zylinderblock und der Nocken um eine Rotationsachse (A) relativ drehbar angebracht sind, wobei der Motor ferner einen Fluidverteiler (60) für die Zylinder, von dem wenigstens ein Teil mit dem Nocken (20) drehfest ist, sowie einen Verteilungsanschluß (50, 150B) umfaßt, der in Bezug auf ein Bezugssystem des Fahrzeugs fest angebracht ist, um den Verteiler (60) mit einer Fluidzuführung und einem Fluidablaß zu verbinden, wobei der Motor einen Durchgang (102) aufweist, der entlang der Rotationsachse angeordnet ist, um einen Antriebswellenabschnitt aufzunehmen, **dadurch gekennzeichnet, daß** der Motor eine ausgerückte Stellung annehmen kann, in der die Kolben (12) von dem Nocken (20) radial abgekoppelt sind, wobei der Zylinderblock (10) in Bezug auf das Bezugssystem des Fahrzeugs fest ist, während der Nocken (20) umlaufend ist, und der Nocken (20) mit einem Abschnitt (200) der Antriebswelle, welcher in dem Durchgang (102) angeordnet ist, drehfest ist.

2. Vorrichtung nach Anspruch 1, ferner umfassend ein Antriebsteil (30), das mit dem Nocken (20) fest verbunden ist und das geeignet ist, mit dem Antriebswellenabschnitt (200) zusammenzuwirken, um den Wellenabschnitt drehanzutreiben.

3. Vorrichtung nach Anspruch 2, **dadurch gekennzeichnet, daß** das Antriebsteil und der Antriebswellenabschnitt nur ein einziges Teil (20030) bilden.

4. Vorrichtung nach einem der Ansprüche 1 bis 3, **dadurch gekennzeichnet, daß** der Hydraulikmotor an seinem Umfang ein Verbindungsteil, welches dazu ausgelegt ist, ein Drehmoment zu übertragen, aufweist.

5. Vorrichtung nach einem der Ansprüche 1 bis 4, **dadurch gekennzeichnet, daß** der Verteilungsanschluß (50) ein Muffenteil (54) aufweist, dessen Innenumfang einen Teil des Durchgangs (102) bildet.

6. Vorrichtung nach Anspruch 5, **dadurch gekennzeichnet, daß** der Verteiler (60) um das Muffenteil (54) herum angeordnet ist.

7. Vorrichtung nach Anspruch 5 oder 6, **dadurch gekennzeichnet, daß** das Muffenteil (54) sich in einem Innendurchgang (14) des Zylinderblocks erstreckt.

8. Vorrichtung nach einem der Ansprüche 5 bis 7, **dadurch gekennzeichnet, daß** das Muffenteil (54) mit wenigstens einem Lager zur Drehlagerung (103, 104) des Wellenabschnitts (200) gegenüber dem Motor zusammenwirkt.

9. Vorrichtung nach einem der Ansprüche 1 bis 8, **dadurch gekennzeichnet, daß** der Verteiler (60) bezogen auf die Fluidzuführung und den Fluidablaß (58) auf der anderen Seite des Zylinderblocks (10) angeordnet ist.

10. Vorrichtung nach Anspruch 9, **dadurch gekennzeichnet, daß** der Verteiler (60) über Leitungen (15B), die den Zylinderblock (10B) zwischen den Zylindern (18B) durchziehen, mit der Fluidzuführung und dem Fluidablaß (58) verbunden ist.

11. Vorrichtung nach einem der Ansprüche 1 bis 8, **dadurch gekennzeichnet, daß** der Verteiler (60) auf der gleichen Seite des Zylinderblocks (10) wie die Fluidzuführung und der Fluidablaß angeordnet ist.

12. Vorrichtung nach einem der Ansprüche 1 bis 11, **dadurch gekennzeichnet, daß** die Zylinder (18B) in Bezug auf die Rotationsachse (A) radial ausgerichtet sind und die Nockenfläche (24) des Reaktionsnockens (20) um den Zylinderblock (10) angeordnet und der Rotationsachse (A) zugewandt ist.

13. Vorrichtung nach einem der Ansprüche 1 bis 12, **dadurch gekennzeichnet, daß** der Verteiler (60) für die Zylinder mit dem Nocken (20) drehfest ist.

14. Antriebssystem eines Fahrzeugs (1001, 1002), umfassend ein mechanisches Getriebe (800), das durch wenigstens einen Hauptmotor (400) betrieben wird, sowie eine Vorrichtung (500) nach einem der Ansprüche 1 bis 13, wobei der Antriebswellenabschnitt (611, 811) ein Teil des mechanischen Getriebes ist.

15. Antriebssystem (1001) eines Fahrzeugs nach Anspruch 14, wobei der Antriebswellenabschnitt (811) ein Teil einer mit dem Hauptmotor (400) verbundenen Hauptantriebswelle (810) ist.

16. Antriebssystem (1002) eines Fahrzeugs nach Anspruch 14, wobei der Antriebswellenabschnitt ein Teil einer Nebenantriebswelle (611) ist, die mit einer Hauptantriebswelle (810) des mechanischen Getriebes (800) verbunden ist.
